# EUROPEAN PATENT APPLICATION

(11) **EP 4 528 248 A1**
(43) Date of publication of application: **26.03.2025**
(21) Application number: 23198689.4
(22) Date of filing: 21.09.2023
(51) Int. Cl.: G01N 15/14

(54) **PARTICLE MANIPULATION SYSTEM WITH CYTOMETRIC CAPABILITY AND FEEDBACK LOOP AND VARIABLE GAIN DETECTOR**

(71) Applicant: Miltenyi Biotec B.V. & Co. KG, 51429 Bergisch Gladbach (DE)
(72) Inventor: HING, Paul, 51429 Bergisch Gladbach (DE)
(74) Representative: Kisters, Michael Marcus

(57) **Abstract**

A MEMS-based particle manipulation system which uses a particle manipulation stage and a plurality of laser interrogation regions. The laser interrogation regions may be used to assess the effectiveness or accuracy of the particle manipulation stage. In one exemplary embodiment, the particle manipulation stage is a microfabricated, flap-type fluid valve, which sorts a target particle from non-target particles in a fluid stream. The laser interrogation stages are disposed in the microfabricated fluid channels at the input and output of the flap-type sorting valve. The laser interrogation regions may be used to assess the effectiveness or accuracy of the sorting, and to control or adjust sort parameters during the sorting process. One or more feedback loops may be used to improve the particle manipulation process, based on data acquired during the first interrogation and/or during a downstream confirmation. Artificial intelligence techniques may be used to good effect. A variable gain detector may improve the speed and sensitivity of the system.

## Description

### BACKGROUND

This invention relates to a system and method for manipulating small particles in a microfabricated fluid channel.

Microelectromechanical systems (MEMS) are very small, often moveable structures made on a substrate using surface or bulk lithographic processing techniques, such as those used to manufacture semiconductor devices. MEMS devices may be moveable actuators, sensors, valves, pistons, or switches, for example, with characteristic dimensions of a few microns to hundreds of microns. A moveable MEMS switch, for example, may be used to connect one or more input terminals to one or more output terminals, all microfabricated on a substrate. The actuation means for the moveable switch may be thermal, piezoelectric, electrostatic, or magnetic, for example. MEMS devices may be fabricated on a semiconductor substrate which may manipulate particle passing by the MEMS device in a fluid stream.

MEMS devices can be used to count a population of target particles, such as particular types of biological cells, like stem cells or tumor cells. MEMS can also be used to separate such target cells from non-target material in a sample stream. Other particle manipulations can also be performed using MEMS device, as discussed further below.

For example, MEMS devices such as a movable valve, may be used as a sorting mechanism for sorting various particles from a fluid stream, such as cells from blood. The particles may be transported to the sorting device within the fluid stream enclosed in a microchannel, which flows under pressure. Upon reaching the MEMS sorting device, the sorting device directs the particles of interest such as a blood stem cell, to a separate receptacle, and directs the remainder of the fluid stream to a waste receptacle.

MEMS-based cell sorter systems may have substantial advantages over existing fluorescence-activated cell sorting systems (FACS) known as flow cytometers. Flow cytometers are generally large and expensive systems which sort and/or count cells based on a fluorescence signal from a tag affixed to the cell of interest. The cells are diluted and suspended in a sheath fluid, and then separated into individual droplets via rapid decompression through a nozzle. After ejection from a nozzle, the droplets are separated into different bins electrostatically, based on the fluorescence signal from the tag. Among the issues with these systems are cell damage or loss of functionality due to the decompression, difficult and costly sterilization procedures between sample, inability to sort sub-populations along different parameters, and substantial training necessary to own, operate and maintain these large, expensive pieces of equipment. For at least these reasons, use of flow cytometers has been restricted to large hospitals and laboratories and the technology has not been accessible to smaller entities.

A number of patents have been granted which are directed to such MEMS-based particle manipulation devices. For example, U.S. Patent No. U.S. Patent 6,838,056 is directed to a MEMS-based cell sorting device, U.S. Patent No. 7,264,972 b1 is directed to a micromechanical actuator for a MEMS-based cell sorting device. U.S. Patent No. 7,220,594 is directed to optical structures fabricated with a MEMS cell sorting apparatus, and U.S. Patent No. 7,229,838 is directed to an actuation mechanism for operating a MEMS-based particle sorting system. Additionally, U.S. Patent Application Nos. 13/374,899 and 13/374,898 provide further details of other MEMS designs.

Optical interrogation is a leading method of measuring the properties of biological samples. Moreover, a microscopy technique is commonly applied in order to gain enough resolution to associate the measured properties to individual particles or structures such as cells, sub-cellular organelles or molecules. Optical measurement techniques involve the illumination or excitation of the sample with electro-magnetic energy, and the measurement of the resulting optical effects such as absorbance, reflection, scatter, emission and luminescence. In order to measure many properties of the sample (known as "multiplexing"), many of these techniques are applied simultaneously to increase throughput. In particular, multi-color fluorescence (wavelength multiplexing) allows a high degree of multiplexing.

Flow cytometry is a technique in which cells are interrogated serially while flowing through a microchannel at high speed to achieve the desired throughput. Furthermore, actions based on the measurement, such as cell sorting, must be done immediately. In this case, the data from the measurement must be processed and interpreted extremely fast within tens of microseconds in order to recognize and select and sort out targeted cells which are moving at high speed, currently in the 1-4 m/s range. Moreover, as genetic and immunological scientific knowledge increases, more properties of the cells must be measured ("high content") in order to recognize and distinguish cell types.

### SUMMARY

This invention provides a method and apparatus for achieving the higher resolution, wider dynamic range, and multi-color or hyperspectral optical measurement of biological objects at high measurement rate which overcome at least one of the above mentioned problems. It allows a less complex optical system with easier alignment and serviceability. The need for sensor gain (bias voltage) adjustment by the end user is eliminated, while the tolerance of biochemical variances is increased.

Accordingly, object of the invention is a variable gain detector, comprising at least one circuit that varies a gain applied to a sensor between at least two values, a higher value and a lower value, and a detector having a plurality of independently controllable sensors with variable gain, wherein the sensor senses fluorescent light emitted from a biological sample tagged with a fluorophore.

Another object of the invention is a system for manipulating particles, comprising:
a microfabricated cell sorting system, which distinguishes target cells from non-target material, wherein the target cells are distinguished by a laser-induced fluorescent signal, and wherein this laser-induced fluorescent signal is detected by the variable gain detector of the invention.

One feature of the MEMS-based particle sorting system is that the fluid may be confined to small, microfabricated channels formed in a semiconductor substrate throughout the sorting process. The MEMS device may be a valve which separates a target particle from other components of a sample stream. The MEMS device may redirect the particle flow from one channel into another channel, when a signal indicates that a target particle is present. This signal may be a photon from a fluorescent tag which is affixed to the target particle and excited by laser illumination in an interrogation region upstream of the MEMS device. Thus, the MEMS device may be a particle or cell sorter operating on a fluid sample.

More generally however, particles in the fluid stream may be manipulated rather than sorted, by some manipulation including heating, tagging, charging, altering or destroying a target particle flowing in a fluid stream. In this scenario, the target particle may be distinguished from the non-target particle by a fluorescence activated detection, such as that used in the above-described FACS flow cytometers. The identified cells may then be manipulated by the particle manipulation stage. This manipulation may be accomplished by a microfabricated device manufactured on a substrate which heats, tags, charges, alters or destroys the target particles. The fabrication substrate may also include microfabricated channels leading to and from the particle manipulation stage.

A system and method are described which makes use of this architecture which is particular to the particle manipulation systems such as those disclosed in the aforementioned patents. These techniques may form a particle manipulation system with cytometric capability, as described below. A microfabricated device may be used to manipulate the particles in the fluid stream enclosed in the microfabricated channel. In this system and method, a plurality of interrogation regions exist within the microfluidic pathways, with one laser interrogation region upstream of the MEMS device, and at least one additional laser interrogation region downstream of the MEMS device. The additional laser interrogation regions may be used to confirm the performance of the microfabricated manipulation device.

Accordingly, the particle manipulation system with cytometric capability may include an interrogation region that identifies the particles flowing in the sample stream. The identification methodology may include, but is not limited to, one or more laser interrogation regions that use laser excitation to induce identifying fluorescence from a fluorescent tags affixed to a target particle. This interrogation region may include laser light directed into a first laser interrogation region in first portion of a microchannel formed in a substrate, at least one particle manipulation stage formed in the substrate, and laser light directed into at least one additional laser interrogation region formed in a second portion of a microchannel formed in the substrate, wherein the first portion of the microchannel is disposed upstream of the particle manipulation stage, and the second portion of the microchannel is disposed downstream of the particle manipulation stage, and the particle manipulation stage comprises a movable structure microfabricated on the substrate which includes the microfluidic channels. Other types of identifying features may also be used to identify target particles, and this identification may be made upstream and/or downstream of the particle manipulation device, as described further below.

In one embodiment, the MEMS device is a flap-type cell sorter, which sorts a target cell (cancer cell, sperm cell, stem cell for example) from the other components of a fluid stream. The MEMS sorter may be a flap or diverter which is pulled down into the channel to redirect the flow in response to the detection of a target particle in the channel. This flap directs the flow into a sort channel rather than the waste channel.

In one embodiment, the additional interrogation region may be disposed in the sort channel, where the target particles are directed by the MEMS sorter. By counting the proportion of target particles to non-target particles, the effectiveness of the sorter can be ascertained, and properties or parameters can be adjusted as the sorting process is underway.

In other embodiments, the particle manipulation system may monitor a set of manipulation parameters which characterize or affect the performance of the particle manipulation system. These parameters can be updated to alter, improve, or optimize the functioning of the particle manipulation system. The operation of the particle manipulation system can be monitored of controlled remotely using internet services via wired or wireless connections. Data generated by the system can be stored digitally in a manner that allows the data to be shared or accessed by multiple users.

In another embodiment, a variable gain may be applied to the fluorescence detector that monitors the fluorescence signal, as described below.

The present invention overcomes the problems of the prior art provides a simpler and more robust solid-state solution through the following:

The emitted light from the sample is formed into a desired spatial intensity profile on a first axis ("spatial axis").

The intensity profile may be implemented using refractive or diffractive optics, a graded optical filter, filters of different attenuations.

The resulting said light with intensity profile is projected onto one or a plurality of optical sensors ("intensity sensors"), wherein the same or different light intensities are incident onto the sensors.

The emitted light from the sample is spectrally separated into its wavelength components along a second axis ("spectral axis").

Accordingly, the variable gain detector and the particle manipulation system may comprising at least one of a circuit that varies the gain applied to a sensor between at least two values, a higher value and a lower value, and a detector having independently controllable sensors.

These and other features and advantages are described in, or are apparent from, the following detailed description.

### BRIEF DESCRIPTION OF THE DRAWINGS

Various exemplary details are described with reference to the following figures, wherein:
Fig. 1a is a simplified illustration of a microfabricated particle manipulation system;
Fig. 1b is a simplified illustration of a microfabricated particle manipulation system according to the present invention;
Fig. 2a is a simplified illustration of a microfabricated particle manipulation system having an intersection;
Fig. 2b is a simplified illustration of a microfabricated particle manipulation system having an intersection according to one embodiment of the present invention;
Fig. 2c is a simplified illustration of a microfabricated particle manipulation system having an intersection according to another embodiment of the present invention;
Fig. 3a is a simplified illustration of a microfabricated particle manipulation system according to one embodiment of the present invention, with the sort valve in the closed position;
Fig. 3b is a simplified illustration of a microfabricated particle manipulation system according to one embodiment of the present invention, with the sort valve in the open position;
Fig. 4a is a simplified illustration of a microfabricated particle manipulation system according to another embodiment of the present invention, with the sort valve in the closed position;
Fig. 4b is a simplified illustration of a microfabricated particle manipulation system according to another embodiment of the present invention, with the sort valve in the open position;
Fig. 5 is a simplified illustration of a microfabricated particle manipulation system according to an embodiment of the present invention, showing the field of view of the detector compared to the interrogation regions;
Fig. 6 is a simplified plan view of a microfabricated particle sorting system in the quiescent (no sort) position, showing the stationary magnetically permeable feature;
Fig. 7 is a plan view of the actuation mechanism for the microfabricated particle sorting system, showing the functioning of the external magnetic field in combination with the stationary magnetically permeable feature, in the actuated (sort) position;
Fig. 8 is a simplified schematic plan view of the microfabricated particle manipulation system with optical camera confirmation;
Fig. 9 is a simplified schematic plan view of the microfabricated particle manipulation system with camera confirmation, showing the path of a target particle within the system;
Fig. 10 is a simplified schematic plan view of the microfabricated particle manipulation system with camera confirmation showing the feedback loop between the camera and the controller to control the gate timing of the microfabricated particle manipulation system;
Fig. 11 is the simplified illustration of the feedback loop mechanism shown in Fig. 10;
Fig. 12 is the simplified the illustration of an optimization routine involving trigger timing, and the camera confirmation;
Fig. 13 is a plan view of the microfabricated particle sorting system in combination with a hydrodynamic focusing manifold;
Fig. 14 is a simplified schematic diagram for triangularly shaped cavity;
Fig. 15 is a simplified schematic diagram of a fluid path containing a plurality of triangularly shaped cavities;
Fig. 16 is a simplified schematic illustration of the dean flow forces focusing particles in a specific area of the flow channel; (A), (B). (C), and (D) illustrate the flows within the channel or the locus of particles within the channel;
Fig. 17 is a simplified schematic illustration showing the dean flow forces forcing particles in a specific area of the flow channel, and the effect of the 90° out of plane turn. Fig. 17A shows the cross section, and Fig. 17B shows a plan view;
Fig. 18 is an exemplary embodiment of a sampling scheme that samples one of the outputs of a variable gain detector, where in the sensor is given a variable gain control. Fig. 18(A) shows the signal and sampling scheme qualitatively; Fig. 18(B) is a simplified schematic diagram of the digitization of the signals coming from the variable gain detector;
Fig. 19 is a simplified schematic illustration showing an embodiment for the variable gain detector;
Fig. 20 shows a block diagram overview of the measurement system for flow cytometry;
Fig. 21 shows an embodiment of a detector means, and its programable signal chain;
Fig. 22 shows the projection of the spectra of emitted light from a sample onto a possible arrangement of sensors;
Fig. 23 shows another arrangement of the sensors to acquire four beams, for example four spectral regions (number of pixels per row in x and y arbitrary); and
Fig. 24 is system level schematic diagram of an embodiment of a particle manipulation system with multiple laser interrogation regions, having multiple laser sources, and the variable gain detector.

### DETAILED DESCRIPTION

The system described herein is a particle manipulation system which may make use of microchannel architecture of a MEMS particle manipulation system, such as those disclosed in the aforementioned patents. More generally, the systems and methods describe a particle manipulation system with multiple laser interrogation regions, which form a particle manipulation system with cytometric capability. A feedback loop may be implemented to monitor and/or control parameters that determine the performance of the particle manipulation system. Laser interrogation regions may provide information as to the effectiveness or accuracy of the particle manipulations, allowing the manipulations to be adjusted or controlled during the process in the aforementioned feedback loops.

This document describes a novel detection system which is appropriate for this application. The detection system allows uniquely high speed, accurate operation of the particle manipulation system. The following terms are used herein, and my be understood as follows: a "detector" is the device or unit which contains one or more "sensors" to establish the presence of or to measure something. A "sensor" is an individual unit which responds to a stimulus, light in this case. Each "sensor" is a "pixel" when multiple sensors are used in a linear or 2-dimensional array. A "camera" is an optical instrument that captures images.

The present invention overcomes the problems of the prior art provides a simpler and more robust solid-state solution through the following:

The emitted light from the sample is formed into a desired spatial intensity profile on a first axis ("spatial axis").

The intensity profile may be implemented using refractive or diffractive optics, a graded optical filter, filters of different attenuations.

The resulting said light with intensity profile is projected onto one or a plurality of optical sensors ("intensity sensors"), wherein the same or different light intensities are incident onto the sensors.

The emitted light from the sample is spectrally separated into its wavelength components along a second axis ("spectral axis"). The intensity profile may be implemented using refractive or diffractive optics, a graded optical filter, filters of different attenuations.

The resulting light which is spectrally separated is projected onto one or a plurality of optical sensors ("spectral sensors"), whereby in some embodiments the spectral resolution (sensors per unit wavelength) is higher than that necessary for discrimination of luminescence labels. This allows optimizing of sensitivity and dynamic range according to wavelength, by selectively summing the signals from the sensors.

The emitted light may be projected in the form of a 2-dimensional spectral image onto one or a plurality of optical sensors.

In some embodiments the type, number and positions of the "intensity sensors" and "spectral sensors" are positioned spatially in 3 dimensions individually or in groups at the optimal focal plane of the incident light, allowing easier and simpler optical systems. One embodiment of this is a regular X-Y matrix, whereby all or a subset of the sensors are actively used. In other embodiments, the type, number and positions of the said sensors are optimally selected. For example, when measuring luminescence spectra, the number, size and position of sensors on the spectral axis are optimized for best spectral resolution and dynamic range for the labels to be used.

One or more parameters (such as a bias voltage) of the said sensors is varied programmatically, either individually or in groups.

Means of programmatically summing the outputs of one or more selected sensors in analog form (e.g. current), individually or in groups. In an embodiment, the outputs of multiple sensors receiving different intensities of incident light within a desired wavelength band are summed in order to increase dynamic range. The gain of the signal amplification in analog form of the outputs of one or more selected sensors (e.g. current), can be varied programmatically, individually or in groups.

The analog signal from a said sensor may be compressed in a portion or all of the dynamic range. Programmable summing of the digital outputs from one or more sensors further improves dynamic range beyond the ranges of the analog circuits.

Furthermore, the programmable summing in analog and/or in digital form may be done a) specific to the application being run, b) via Instrument-specific calibration and/or settings c) adaptively to real-time (measurement-time) situation in order to optimize dynamic range, sensitivity, and spectral resolution. The summation described above is done either based on a-priori information about the sample, or adaptively in real time.

The plurality of optical sensors are capable of operating completely independently of each other. For example they can have separate electronic amplifiers, gain, controls and related parameters, timing.

Feedback control is employed to adaptively control the sensors and their parameters individually or in groups in real time during the interrogation of an object such as a cell such that the measurements are optimized, for example, kept within the valid dynamic range of the measurement system.

In another embodiment the feedback control system controls a "manipulation means" which is capable of influencing the sample within the interrogation region and time. For example, if the intensity of measured light emission shows a trend toward saturation of the sensor(s), or is too weak, the emission is actively improved, for example by photobleaching or photoactivation, or by chemical means.

In another embodiment the feedback control means stabilizes the response of the one or more sensors continuously in real time such against changes in the operating environment, for example temperature.

In another embodiment, the gain of one or more sensor(s) is adjusted in real time (Automatic Gain Control "AGC") based on previous measurements in order to for example keep the sensor in its measurement range, or to avoid any negative effects of saturation. Moreover this is done individually for all sensors.

A means for processing the outputs of the said sensors is provided to achieve higher resolution, linearity, wider dynamic range, and multi-color or hyperspectral optical measurement of the biological sample. Measurement parameters actually used in the measurement of a sample are stored during the interrogation and used either immediately or by a processing means to reconstruct a highly linear, wide dynamic range.

The plurality of sensors may comprise different types of sensors. Furthermore, the properties and physical positioning of a sensor is selected to optimize the expected wavelength and/or intensity ranges expected. For example, a sensor optimized for brighter signals is placed in the wavelength range in which the maximum luminescence intensity of the fluorophore is expected, whereas a sensor with high sensitivity is placed in other wavelength regions where the luminescence of the fluorophore is known to be weaker.

For embodiments in which real-time feedback control was applied, the parameters are stored and applied as correction factors later in data processing. State-of-the-art solid-state sensors such as SiPM's, Avalanche Photodiodes (APD), Single Photon Avalanche Diodes (SPAD), PMTs and/or image sensors are employed, wherein in some embodiments, these various types of sensors may be combined in a measurement system in order to advantageously make use of their different properties to increase dynamic range.

A further embodiment uses a means of compressing at least a portion of the dynamic range of an amplification circuit. A first implementation is a logarithmic amplifier; a second implementation is a piecewise linear transfer function, a combination thereof, or the like. It should be understood that the term "adaptive" as used herein should be understood to mean based on previous measurements, without a-priori information. "Real time" should be understood to mean a feedback control loop reaction time which is less than the acquisition period between measurements. For flow cytometry this is less than 10 microseconds.

In the figures discussed below, similar reference numbers are intended to refer to similar structures, and the structures are illustrated at various levels of detail to give a clear view of the important features of this novel device.

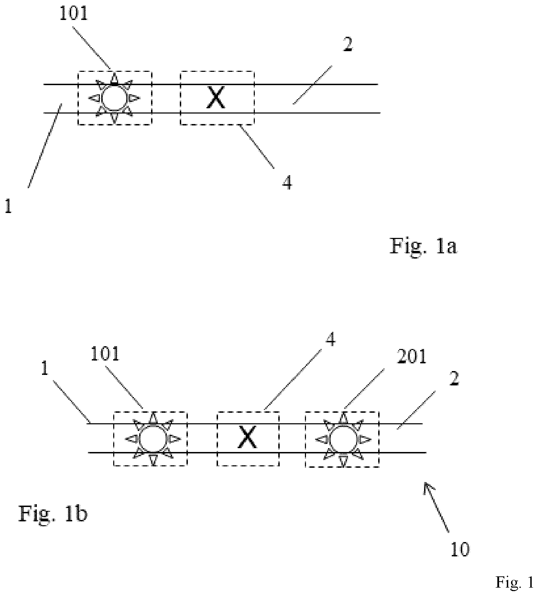

Fig. 1a is a schematic illustration of a MEMS-based particle manipulation system using lithographically formed microfluidic channels. One microfluidic channel 1 may be an input channel which directs a fluid flow. The fluid stream in microfluidic channel 1 flows through a first laser interrogation region 101. In this region, light from one or more lasers is directed. The light may be focused to a spot and onto the particles flowing in the stream, wherein the laser interrogation region 101 is disposed upstream of a microfabricated manipulation stage 4. If the particles have the appropriate fluorescent tag affixed thereto, the tag may be excited and emit a characteristic fluorescent photon. This photon may be detected by optical detectors and evaluated by appropriate logic circuits. The logic circuits may control the manipulation stage 4, which may manipulate the tagged particles under the control of the logic circuits.

In one exemplary embodiment, the MEMS device may apply a charge to the target particle. In another exemplary embodiment discussed further below, the manipulation stage 4 may be an actuator, which diverts the target particle into a different flow path as the non-target particles.

Fig. 1b is a schematic illustration of a particle manipulation system with cytometric capability 10, which uses lithographically formed microfluidic channels, according to the present invention. One microfluidic channel 1 may be an input channel which directs a fluid flow into a manipulation stage 4. Microfabricated device 4 may alter the trajectory, morphology, shape, charge or other characteristic of the particle. Another microfluidic channel 2 directs the fluid flow away from the manipulation stage 4 and into an output channel. A second laser interrogation region 201 may be positioned in microfluidic channel 2. Using laser interrogation region 201 to interrogate the passing particles, the effectiveness, accuracy and/or efficiency of MEMS manipulation stage 4 can be assessed. The simultaneous detection of fluorescence and the manipulated characteristic indicates accurate performance of the manipulation stage.

For example, manipulation stage 4 may apply a charge to a passing particle. Laser interrogation stage 2 may confirm the presence of both the charge and the fluorescent tag by measuring the voltage on a parallel plate capacitor (not shown) installed in the channel 2. By so doing, the coincidence of both the fluorescence and the voltage signal is evidence that the charge is correctly place on tagged particles. In the case of a particle or cell sorter, the presence of the target sorted particle in the sort passage where the additional laser interrogation stage 201 is placed, may indicate correct and effective sorting.

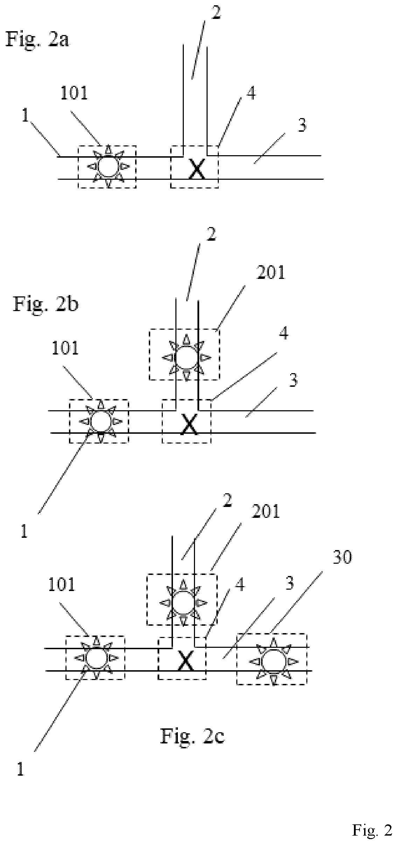

Fig. 2a is a schematic illustration of another particle manipulation system with cytometric capability, using lithographically formed microfluidic channels. In fig. 2a, two or more channels are formed at the output of the manipulation stage 4, forming an intersection point. One channel 2 may move in one path away from the manipulation stage 4, whereas another channel 3 may move in another path away from manipulation stage 4. Fig. 2b depicts a particle manipulation system with cytometric capability. As shown in Fig. 2b, channel 2 may be equipped with an additional laser interrogation stage 201, which may identify the various particles according to their response to irradiation with laser light. If a particle emits a photon in response to irradiation, that is an indication that it is a tagged, target particle. If it does not, it is likely an untagged, non-target particle.

As shown in Fig. 2c, both channels 2 and 3 may be equipped with an additional laser interrogation stage 201 and laser interrogation stage 301, which may identify the various particles according to their response to irradiation with laser light. Indeed, any number of additional laser interrogation regions may be placed in any number of microfluidic channels, although large numbers of such regions may become difficult to separate, as described more fully below. As before, if a particle emits a photon in response to irradiation, that is an indication that it is a tagged, target particle. If it does not, it is likely an untagged, non-target particle. These two laser interrogation stages may measure the difference in density of target particles in one channel 2 relative to the other channel 3 or input channel 1.

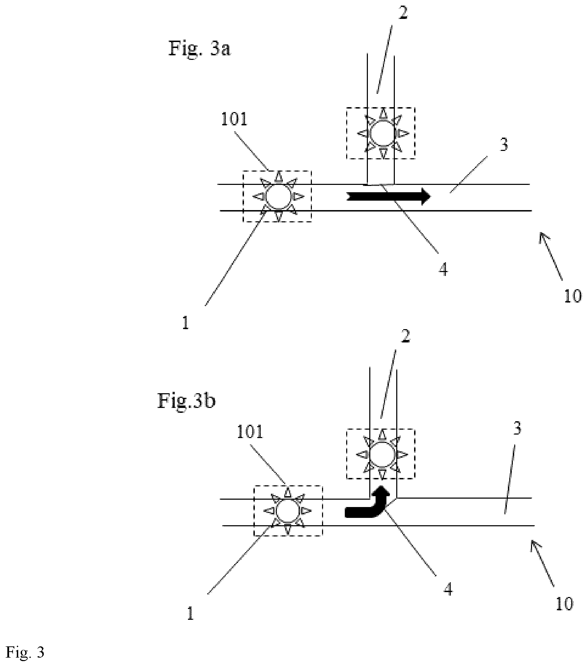

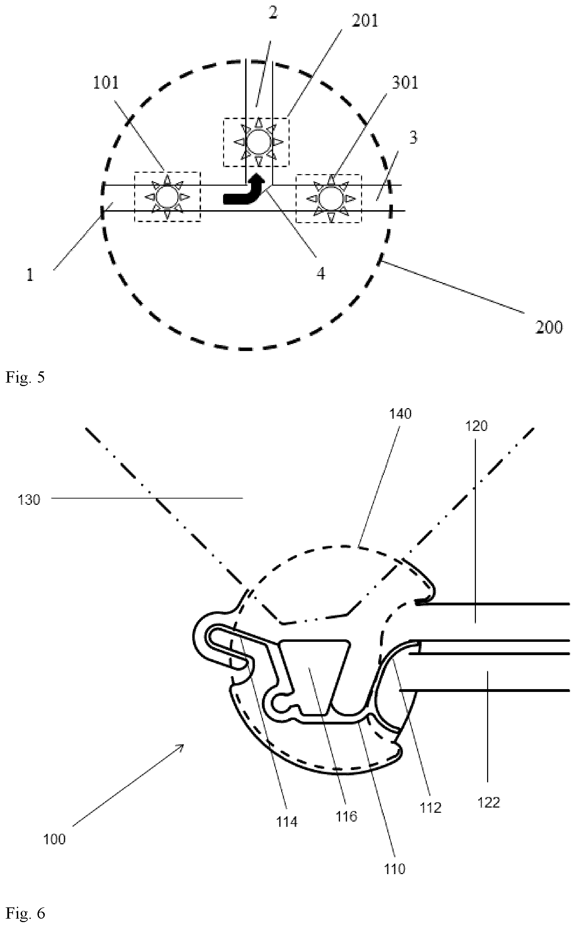

Fig. 3a is a schematic illustration of a particle manipulation system with cytometric capability 10 using multiple laser interrogation regions disposed in lithographically formed microfluidic channels. The manipulation stage 4 may be a MEMS flap-type actuator or sorter. The MEMS flap-type actuator is shown only schematically in Fig. 5, and may be a flap-type fluidic valve which separates a target particle from a remainder of the sample stream, based on a signal from the first laser interrogation region. The MEMS flap-like actuator may be a simple, hinge mounted movable member that may be drawn downward in response to a force acting on the movable member. The force may be, for example, electrostatic, magnetostatic or electromagnetic. The movable member may be formed lithographically on a silicon substrate, and methods for manufacturing such a device may be found in the above-mentioned patents and patent applications.

The MEMS actuator may divert the incoming fluid stream into one of the plurality of exit channels, for example into either channel 2 or channel 3. For example, if a signal from laser interrogation region 101 indicates that a target particle is present, the logic circuit coupled to laser interrogation region 101 may send a signal to the MEMS actuator 4 to activate the flap. Drawing down the flap will divert the detected target particle into the sort channel 2 rather than allowing it to flow past into waste channel 3.

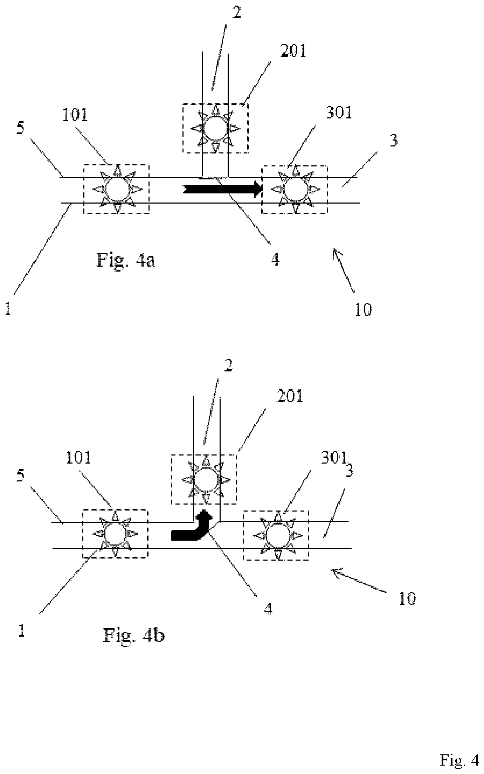

As mentioned previously, waste channel 3 may also be equipped with an additional laser interrogation region 301. This arrangement is shown in Figs. 4a and 4b, which are similar to figs. 3a and 3b, except that two laser interrogation regions 201 and 301 are disposed in sort channel 2 and waste channel 3, respectively. The two additional interrogation regions 201 and 301 may measure the increased density of target cells in sort channel 2 compared to waste channel 3, and thus may provide evidence of the effectiveness and accuracy of the MEMS sorter 4 and laser interrogation region 101.

Thus, as can be seen from the figures above, the additional laser interrogation regions 201 and 301 (or more) may act as a cytometer or as a quality control measure. The system 10 may give feedback as to the correct setting of any adjustable parameters in the sorting algorithm. Such parameters may include, for example, fluorescent pulse shape, width, magnitude or duration, laser intensity, optical alignment or focusing. These parameters may then be adjusted during the sort, rather than waiting for the entire sample to be processed before finding a problem in the sorting. The presence of additional laser interrogation regions 201 and/or 301 may provide cytometer capability to the sorter, in that it is able to count, enumerate, or quantify the density or purity of the sorted sample, while the sorting process is underway. This capability may allow the sort process to be adjusted in real time, that is, while it is underway. This may allow an optimization of sort parameters without performing multiple sorting operations on a sample, thus saving time and sample volume.

Also shown in Fig. 5 is the field of view 200 of the detector monitoring laser interrogation region 101 as well as additional laser interrogation regions 201 and 301. As indicated in Fig. 5, all laser interrogation regions may fall within the detector field of view, and thus may share at least a portion of the optical and electronic data detection channel. Accordingly, light collected from the at least one additional laser interrogation region is collected by an optical system which also collects light from the first laser interrogation region. Details as to how to exploit or implement this feature are set forth below with respect to the remaining figures.

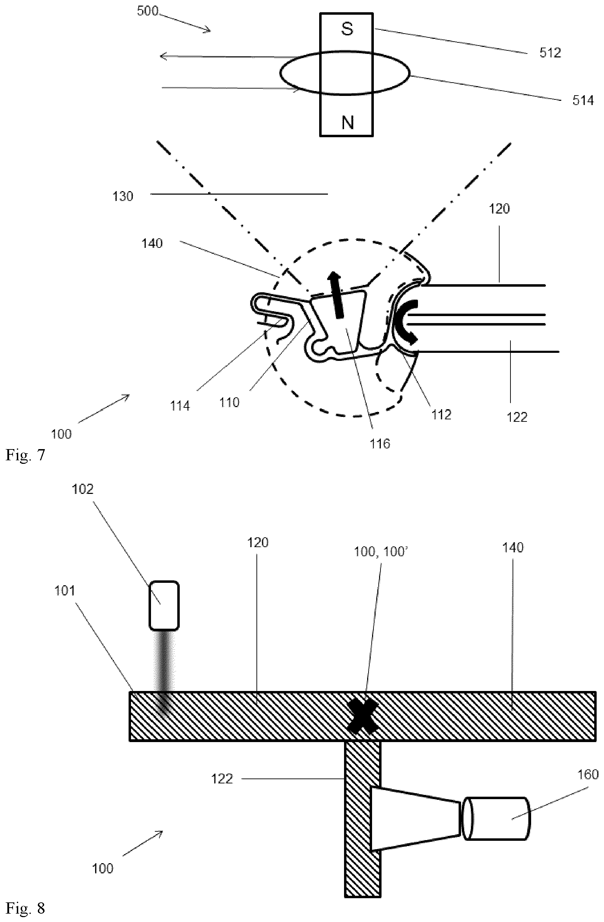

Figs. 6 and 7 illustrate one exemplary embodiment of a particle manipulation stage. In Figs. 6 and 7, the manipulation may be a cell sorting stage 100, 100' that separates at least one target particle flowing in a sample stream of target particles and non-target material. It should be understood that this embodiment is exemplary only, and that many other sorts of particle manipulations may be envisioned, including but not restricted to the particle manipulations described in detail below.

Fig. 6 is a plan view of an exemplary embodiment of device 100. Device 100 may be a magnetically actuated cell sorter using a separate source of magnetic flux to move a small, magnetic MEMS structure 110. Fig. 6 shows the disposition of a stationary permeable feature 130 and further detail of the movable member 110. In this embodiment, the movable member 110 may include the diverting surface 112, the flexible hinge or spring 114, and a separate area 116 circumscribed but inside the line corresponding to movable member 110. This area 116 may be inlaid with a permeable magnetic material such as nickel-iron permalloy, and may function as described further below.

A magnetically permeable material should be understood to mean any material which is capable of supporting the formation of a magnetic field within itself. In other words, the permeability of a material is the degree of magnetization that the material obtains in response to an applied magnetic field.

The terms "permeable material" or "material with high magnetic permeability" as used herein should be understood to be a material with a permeability which is large compared to the permeability of air or vacuum. That is, a permeable material or material with high magnetic permeability is a material with a relative permeability (compared to air or vacuum) of at least about 100, that is, 100 times the permeability of air or vacuum which is about 1.26×10⁻⁶ H·m⁻¹. There are many examples of permeable materials, including chromium (Cr), cobalt (Co), nickel (Ni) and iron (Fe) alloys. One popular permeable material is known as Permalloy, which has a composition of between about 60% and about 90% Ni and 40% and 10% iron. The most common composition is 80% Ni and 20% Fe, which has a relative permeability of about 8,000.

It is well known from magnetostatics that permeable materials are drawn into areas wherein the lines of magnetic flux are concentrated, in order to lower the reluctance of the path provided by the permeable material to the flux. Accordingly, a gradient in the magnetic field urges the motion of the movable member 110 because of the presence of inlaid permeable material 116, towards areas having a high concentration of magnetic flux. That is, the movable member 110 with inlaid permeable material 116 will be drawn in the direction of positive gradient in magnetic flux.

An external source of magnetic field lines of flux may be provided outside the device 100, as shown in Fig. 7. This source may be an electromagnet 500. The electromagnet 500 may include a permeable core 512 around which a conductor 514 is wound. The wound conductor or coil 514 and core 512 generate a magnetic field which exits the pole of the magnet, diverges, and returns to the opposite pole, as is well known from electromagnetism. Accordingly, the movable member 110 is generally drawn toward the pole of the electromagnet 500 as shown in Fig. 7.

However, the performance of the device 100 can be improved by the use of a stationary permeable feature 130. The term "stationary feature" should be understood to mean a feature which is affixed to the substrate and does not move relative to the substrate, unlike movable member or valve 110. A stationary permeable feature 130 may be shaped to collect these diverging lines of flux and refocus them in an area directly adjacent to the movable member 110 with inlaid permeable material. The stationary permeable feature may have an expansive region 132 with a narrower throat 134. The lines of flux are collected in the expansive region 132 and focused into and out of the narrow throat area 134. Accordingly, the density of flux lines in the throat area 134 is substantially higher than it would be in the absence of the stationary permeable feature 130. Thus, use of the stationary permeable feature 130 though optional, allows a higher force, faster actuation, and reduces the need for the electromagnet 500 to be in close proximity to the device 10. From the narrow throat area 134, the field lines exit the permeable material and return to the opposite magnetic pole of the external source 500. But because of the high concentration of field lines in throat area 134, the permeable material 116 inlaid into movable member 110 may be drawn toward the stationary permeable feature 130, bringing the rest of movable member with it.

When the electromagnet is quiescent, and no current is being supplied to coil 514, the restoring force of spring 114 causes the movable member 110 to be in the "closed" or "waste" position. In this position, the inlet stream passes unimpeded through the device 100 to the waste channel 140. This position is shown in Fig. 6. When the electromagnet 500 is activated, and a current is applied through coil 514, a magnetic field arises in the core 512 and exits the pole of the core 512. These lines of flux are collected and focused by the stationary permeable feature 130 and focused in the region directly adjacent to the throat 134. As mentioned previously, the permeable portion 116 of the movable member 110 is drawn toward the throat 134, thus moving the movable member 110 and diverting surface 112 such that the inlet stream in inlet channel 120 is redirected to the output or sort channel 122. This position is shown in Fig. 7.

Permalloy may be used to create the permeable features 116 and 130, although it should be understood that other permeable materials may also be used. Permalloy is a well known material that lends itself to MEMS lithographic fabrication techniques. A method for making the permeable features 116 and 130 is described further below.

As mentioned previously, having the waste channel 140 and 142 directly beneath the movable member or valve 110 allows the movable permeable feature 116 to be disposed much closer to the stationary permeable feature 130. If instead the waste channel were in the same plane, this gap would have to be at least large enough to accommodate the waste channel, along with associated tolerances. As a result, actuation forces are higher and valve opening and closing times are much shorter. This in turn corresponds to either faster sorting or better sorting accuracy, or both.

With the use of the electromagnetic actuation technique described above, actuation times on the order of 10 microseconds can be realized. Accordingly, the particle sorting device is capable of sorting particles at rates in excess of 50 kHz or higher, assuming 10 microseconds required to pull the actuator in, and 10 microseconds required to return it to the as-manufactured position.

A simplified plan view of the particle manipulation system with cytometric confirmation using an optical camera 160 is shown in Fig. 8. Shown in Fig. 8 is the input channel 120, the sort channel 122, and the waste channel 140. It should be understood that the waste channel 140 maybe in a different plane than the input channel 120 and sort channel 122, as described above with respect to Fig. 7. However, for ease of the depiction, the waste channel 140 is shown as being in the same plane as the other two channels 120 and 122.

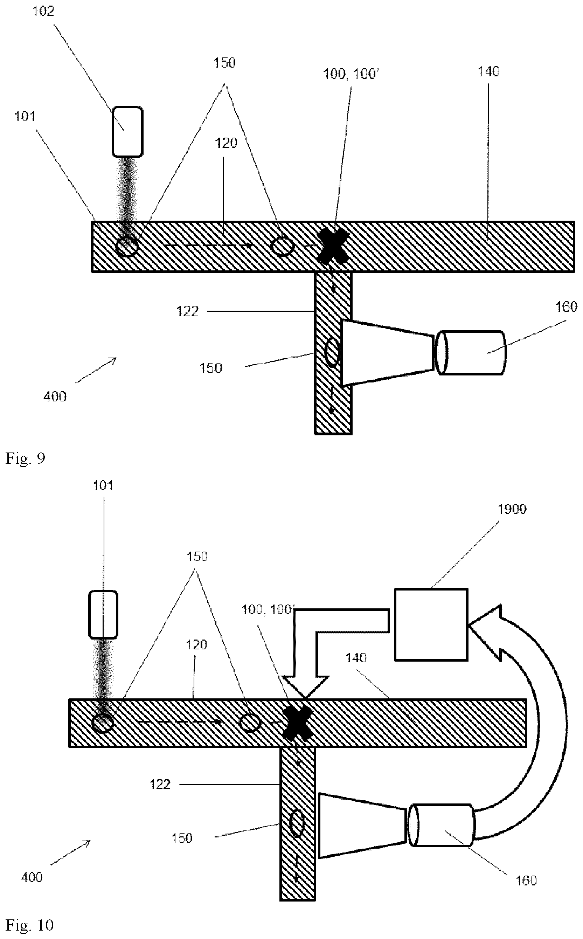

Laser interrogation region 101 is shown in the input channel 120 upstream of the particle manipulation stage 100. The output of a laser 102 may be directed into the laser interrogation region 101 in the input channel 120. A particle manipulation stage 100 or 100' may be disposed at the junction of the input channel 120 with the sort channel 122 and waste channel 140. Particle manipulation stage 100 or 100' may be any of the above described particle sorting mechanisms such as 100 shown in Fig. 6, or 10' shown in Fig. 7a, 7b. The optical camera 160 may be disposed in the sort channel 122 (or optionally in the waste channel) in proximity to the particle manipulation stage 100. The optical camera 160 may have a field of view that includes at least a portion of the sort channel 122 and also may include a portion of the valve mechanism. The optical camera 160 may take an image of the particles in the stream passing through the sort channel 122 through the optically transmissive layer that covers the microfabricated channels 120 and 122 made in the substrate, as described above.. The field of view of the camera 160 may include the sorting mechanism, which may be helpful for assessing its condition, as well as measuring the velocity pf the particle through the particle manipulation stage, for example.

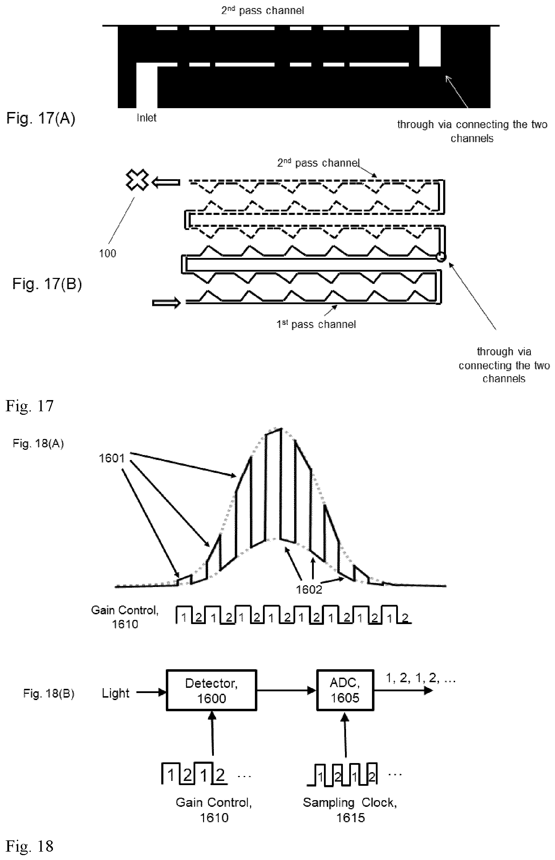

Fig. 9 is a schematic view of the particle manipulation system 400 with camera confirmation in operation. In operation, the particle manipulation system 400 with camera confirmation may have one or more target particles 150 flowing in the sample stream in the input channel 120 and through the laser interrogation region 101. The laser will irradiate the target particle 150 which will then fluoresce as a result of the irradiation. The fluorescence will be detected by detector which is not shown in Fig. 10. The output of this detector may be delivered to a controller 1900 (Fig. 10, 18). This controller then may send out a sort trigger pulse which may cause the movable member 110 of the microfabricated particle manipulation stage 100 to move to the sort position as was shown in Fig. 7.

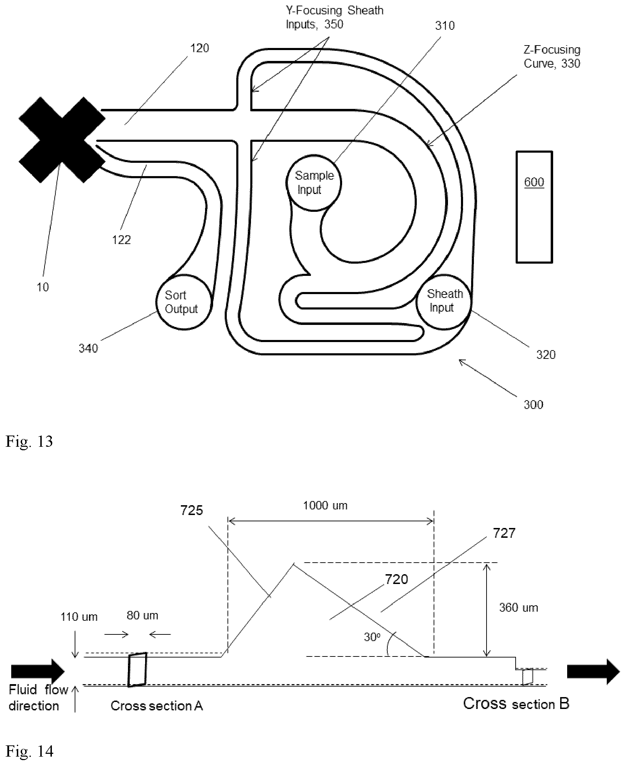

This sort trigger pulse may also arm optical camera 160, and prepare it to capture an image of the sort channel 122. Accordingly, the optical camera 160 and the particle manipulation stage 100 maybe controlled by the same signal, and based on the detected fluorescence. These control signals may be generated by a controller 1900, which is shown in the system level view of Fig. 14. There may be a delay however, between the sort trigger delivered to the movable member 110 compared to the trigger for optical camera 160. This delay may give the target particle 150 a chance to move into the sort channel 122, and within the field of view of the optical camera 160.

The optical camera 160 may be configured to generate repeated images of the same field view as triggered by the controller signal just described. These images may be overlaid to show the sequence and time evolution of the field of view of the optical camera 160. Accordingly, as multiple target particles are sorted by particle manipulation stage 100, this plurality of target particles will show appear in the field of view of the optical camera 160. Thus, the output of the optical camera 160 may show multiple particles within the image, and the particles may be clustered in a particular location within the image. The location of this cluster of target particles may be an indication of the relative precision of the timing of the sort pulse relative to detection of fluorescence of the target particle 150 in the detection region 101. The distribution of particles in the channel may be indicative of the variability of particle speed and location, within the flow, or variability in the fluid flow itself, for example.

The geometric center of the cluster is referred to herein as the "locus" of particles within the field of view. The locus may alternatively be understood as the center of the circle which includes most or all of the detected and sorted particles. If the locus appears in the downstream edge of the field of view of optical camera 160, it may be an indication that the sort trigger is somewhat late. In other words, the position of the locus may be an indication that the timing between the detection of the particles by the laser interrogation region 101, and the opening of the sort gate 110, maybe slightly too early or slightly too late. Accordingly, by analyzing the locus of the target particles in the field of view of the optical him a 160, the timing between the detection and sorting operations may be optimized. This may improve at least the purity and/or the yield of the particle manipulation system 100. Accordingly, the particle manipulation system with optical confirmation may be capable of optimizing itself under computer control, that is the system maybe "self-aware". With no other operator intervention, the system may be able to optimize its various parameters including sort gate timing, sort gate width, laser power and positioning, etc., based on the sequence of images captured by the optical camera and analyzed by the computer.

The particle manipulation system may use a camera to image the target particles and a controller to determine the locus of the particles within a field of view of the camera, and the controller may adjust sort gate timing thereby.

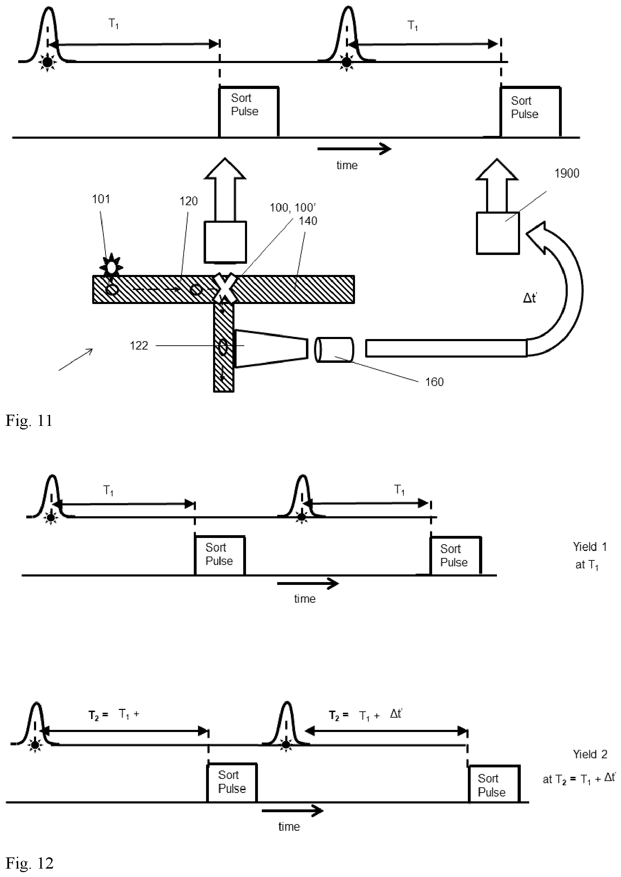

Accordingly, the particle manipulation system with camera confirmation 100 may be used in a feedback loop as illustrated in Fig. 11. Fig. 11 shows the laser interrogation region 101 disposed in the input channel 120 which branches at the particle manipulation stage 100 into the waste channel 140 and sort channel 122. As before, the plurality of target particles 150 may be flowing in the input channel 120 and may be diverted by the particle manipulation stage 100 when the fluorescent signal is detected. The target particle 150 then flows through the field of view of the optical camera 160 which takes an image of the passing target particle 150. By overlaying the plurality of images taken by the optical camera, and analyzed by the controller 1900 (Fig. 10, 18), the system may find the locus of particles within the field of view. The controller 1900 may then make adjustments to the sort gate timing relative to the laser detection, in order to optimize either the purity, or the yield, of the sorted product.

This feedback loop is shown qualitatively and Fig. 11 as the arrows connecting the optical camera 160 to the controller 1900, and the controller 1900 to the movable member 110.

Normal operation of the system 100 is depicted in Fig. 12. In Fig. 12, the controller regularly puts out a sort pulse in response to the detection of a target particle in the laser interrogation region 101. These pulses are shown on the horizontal axis in Fig. 12. Coincidentally, the optical camera 160 collects overlaid images of the target particles passing through its field of view in the sort channel 122. The data is collected and analyzed by the controller 1900, and adjustments are made to the operating parameters.

The results of the closing of this feedback loop are illustrated in Fig. 13. When the controller, or human operator, analyzes the locus of particles appearing in the field of view of the optical camera 160, a determination may be made that the locus is not placed accurately enough, or is shifted to an edge of the field of view, and that an improvement may be made. In this case, the controller, or an operator, may alter the timing between the laser detection and sort trigger. Before this adjustment is made, the controller may put out a sort trigger at a time T = T1, that is, at a time T1 after the identification of the target particle by the laser interrogation region 101. The operation of the system in this mode will generate sorted population with a yield of some percent, and a purity of another percent. Upon a determination that this yield, or purity, may be improved, the controller 1900 may alter the pulse timing between the detection of the target particle, and the generation of the sort trigger pulse. The controller may determine that this delay should be increased from T = T1, to T = T1 + □T. This new value is then sent to the movable member 110 at a time T = T1 + □T. This may result in a relocation of locus of the target particles within the field of view, and improvement in either yield, or purity, or both. The situation is shown qualitatively in Fig. 13.

Because of the microfabricated nature of particle manipulation device 100, it lends itself to techniques that can make use of such an enclosed, well defined architecture. One such technique is illustrated in Fig. 13, wherein the microfabricated particle manipulation device may be coupled to a microfabricated fluidic focusing element 300. The focusing element 300 may include at least one additional sheath fluid inlet channel 320 that provides a sheath fluid to the sample stream and also a z-focusing curve 330 coupled to the sheath fluid inlet channel 320. The sheath fluid may be used to adjust the concentration or positioning of the target particles within the sample inlet channel. The focusing element 300 may be configured to urge the target particles into a particular portion of the sample inlet channel 120, such that the sorting process has fewer errors, as described further below. The focusing element 300 may be disposed in substantially the same plane as the movable member 110, and may be formed in the same substrate surface as the movable member 110 and sample inlet channel 120. The focusing element 300 may rely on inertial forces to focus the particles, as will be described further below. These forces may require relatively large flow rates to be effective. The microfabricated particle manipulation system with out-of-plane channel may be particularly suited to such an inertial focusing device, because of the narrow channels and high flow rates.

Fig. 13 depicts the microfabricated focusing element 300 which may be used to focus the particles in a certain area within the fluid stream. As the name suggests, the sheath fluid inlet channel 320 adds a sheath fluid to the sample stream, which is a buffering fluid which tends to dilute the flow of particles in the stream and locate them in a particular portion of the stream. The combined fluid then flows around a focusing element 300 coupled to the sample inlet channel 120. The focusing element 300 may include here a z-focusing curve 330, which tends to herd the particles into a particular plane within the flow. This plane is substantially in the plane of the paper of Fig. 13. The combined fluid in the focusing element 300 then passes another intersection point, a "y-intersection point" 350, which introduces additional sheath fluid above and below the plane of particles. At the y-intersection point 350, two flows may join the z-focus channel 330 from substantially antiparallel directions, and orthogonal to the z-focus channel 330. This intersection may compress the plane of particles into a single point, substantially in the center of the stream. Accordingly, at the y-intersection point 350 the target particles may be compressed from a plane to a stream line near the center of the z-focus channel 330 and sample inlet channel 120. Focusing the particles into a certain volume tends to decrease the uncertainly in their location, and thus the uncertainty in the timing of the opening and closing of the movable member or valve 110. Such hydrodynamic focusing may therefore improve the speed and/or accuracy of the sorting operation.

In one exemplary embodiment of the microfabricated particle manipulation device 100 with hydrodynamic focusing illustrated in Fig. 13, the angular sweep of z-bend 330 is a curved arc of about 180 degrees. That is, the approximate angular sweep between the junction of the sheath fluid inlet channel 320 and the y-intersection point 350, may be about 180 degrees. Generally, the radius of curvature of the z-bend 330 may be at least about 100 microns and less than about 500 microns, and the characteristic dimension, that is the width, of the channels is typically about 50 microns to provide the focusing effect. In one embodiment, the radius of curvature of the channel may be about 250 microns, and the channel widths, or characteristic dimensions, for the sample inlet channel 120 and z-bend channel 330 are on the order of about 50 microns. These characteristic dimensions may provide a curvature sufficient to focus the particles, such that they tend to be confined to the plane of the paper upon exit from the z-focus channel 330 at y-intersection point 350. This plane is then compressed to a point in the channel at the y-intersection point 350. Accordingly, the y-intersection 350 flows along with the z-focusing element 330 may urge the particles into a single stream line near the center of the microfabricated sample inlet channel 120.

Fig. 13 shows another embodiment of a focusing element, 700. In this embodiment, the focusing element 700 includes a plurality of segments having a variable lateral dimension or cross section. The variable cross section portion of the channel serves to urge or focus the particles into a particular portion of the stream flowing in the channel. The discussion now turns to the design and performance details of this variable cross section focusing channel as applied to the above described microfabricated particle sorter 100.

The novel flow channel may possess portions of variable cross section, wherein the variable cross section arises from the shapes of the sidewalls of the flow channel. These variable portions may have one sidewall which is substantially straight with respect to the flow direction, and an adjacent side wall which is not straight, or at least not parallel to the substantially straight portion. In particular, this adjacent sidewall may be triangular or parabolic in shape, deviating away from the straight sidewall in an expanding region, to a point of maximum channel width, before coming back to the nominal distance between the sidewalls in a contracting region. The expanding portion, maximum point, and contracting portion may constitute what is hereafter referred to as a fluid "cavity" 620 in the microfabricated channel. Accordingly, the variable channel width segments may define expansion/contraction cavities 620, 620' within the microfluidic channel, wherein the cavity is defined by the expanding portion followed by the contracting portion.

The cavity 720 should be understood to be in fluid communication with the microfabricated fluid channel, such as sample inlet channel 120, such that fluid flows into and out of the cavity 620. It should be understood that this cavity 620 may be a two-dimensional widening of the channel in the expanding region, and narrowing of the channel in the contracting region. This shape of geometry is shown schematically in Fig. 13.

The variable cross section focusing channel 700 may be used instead of the curved focusing channel 300 shown in Fig. 13. That is, the variable crass section focusing channel 700 may be used in place of the z-focusing curve 330, or in place of the entire focusing element 300. The variable cross section focusing element 700 may be disposed upstream of the moveable member sorting device 110.

Figs. 14-17 depict another exemplary embodiment of the focusing structure which focuses the suspended particles into a portion, for example a particular quadrant, of the cross section of the fluid channel.

Fig. 14 is a simplified schematic diagram of a fluid path with a variable cross-section. In this embodiment, the shaped cavities 720 which are shown in Fig. 14, have a triangular shape 720 as shown in Fig. 14. Because of the asymmetry of this triangular shape, these cavities may cause a more effective focusing forces that concentrate particles within the flow.

In the embodiment shown in Fig. 14, the triangular cavity 720 may have a 60° angle with respect to the incoming streamline, and a 30° angle with respect to the outgoing streamline. These angles are as defined in Fig. 14, which shows that the first-encountered wall 725 may form an angle of about 60 degrees with respect to the parallel, horizontal wall of the flow channel. The second-encountered wall 727 may form an angle of about 30 degrees with respect to the parallel, horizontal wall of the flow channel. The third angle in the triangle is, of course, 90°.

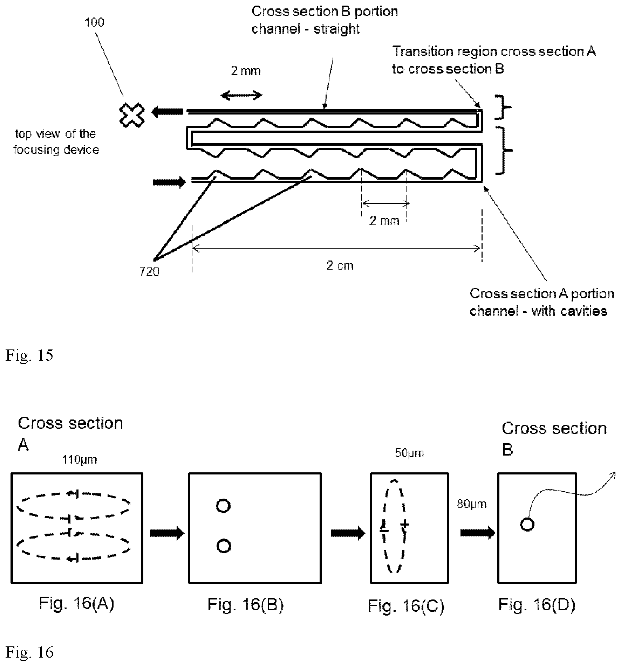

The relatively wide entrance angle to the triangular region 720 may enforce pronounced Dean flow forces in this region, focusing particles as described above. The gentler 30 degree exit angle may urge the particles into their new stable positions. The series of triangular regions 720 may enforce this behavior again and again, until the stable positions shown in Fig. 16B are reached.

The pitch between the triangular cavities may be about 2 mm. The height of each triangular cavity as defined in Fig. 14, maybe about 360 µm. The total length of the triangular cavity may be on the order of about 1000 µm, or 1 mm. It should be understood that these dimensions are exemplary only.

The incoming fluid channel may have a channel height of about 110 µm, as shown in the figure. The depth of this channel may be about 80 µm. This channel cross-section is maintained throughout the input to the triangle. Upon encountering the triangular cavity 760, the 110 micron dimension expands dramatically, whereas the 80 micron depth is maintained, as further described below.

The 80 µm dimension may pertain to the depth of the channel, that is, the depth of the channel in the dimension into the paper. A perspective view of the flow channel also appears in Fig. 14. This 80 µm depth is maintained throughout the triangular cavity. In contrast, the 110 µm channel height varies from 110 µm at the entrance to a height of (360+110) µm at the apex of the triangular cavity 760, before descending again to 110 µm at the output of the triangular cavity 760. The curvature imparted to the streamlines by the existence of this cavity generates the Dean flow which provides the focusing force as described previously. It should be understood that all dimensions provided herein are exemplary only, and that other embodiments using different dimensions are included in the scope of the appended claims.

Fig. 15 is a simplified schematic illustration of the flow channel from a zoomed out perspective. Fig. 15 shows a plurality of triangular cavities disposed in the fluid path. It should be understood, that this diagram is not to scale, and the details may be altered for ease of illustration. In particular whereas Fig. 15 shows only about 18 triangles cavities, there may in fact be many more, for example 50 or even 75 triangular cavities in the flow path.

There may also be a transition region shown in Fig. 14, wherein the shape of the flow channel changes abruptly. In this transition region, the cross sectional shape of the flow channel may transition from shape "A" to shape "B". The difference between the cross section A and cross section B is that the aspect ratio (AR = height divided by depth) changes from AR>1 to AR<1. In cross section A, the aspect ratio is 110/80 = 1.375, whereas in cross section B, the aspect ratio is 50/80 = 0.625. The effect of this transition is described below.

It should be understood that these dimensions and the ratios between them are exemplary only. More generally, the channel height may bt, for example, between 50um and 500 um, and the channel width may be between about 30 um and about 120 um. Accordingly, the aspect ratio in the "tall" segment (AR>1) may simply have an aspect ratio greater than 1 (for example, between 1+ and 50), and the aspect ratio in the "wide" segment may simply have an aspect ratio less than 1 (for example, between 0.4 and 1-).

Because the Dean flow forces take some time to urge the particles into the desired portion of the fluid channel, a substantial length of fluid path may be required to accomplish the focusing. In some embodiments, the total path length may be on the order of, for example, 8 cm or more. In view of this length, it may be advantageous to fold the fluid path in order to make the device more compact. Fig. 15 shows six such turns, which gives a fluid path a serpentine shape. It should be understood that the path may be much longer with more turns. However, the features may not be drawn to scale because the details are impossible to render on the much larger scale of this 8 cm fluid path. Over this 8 cm distance, the particles in the fluid stream may be strongly focused into a single quadrant of the cross section. The location of the microfabricated fluid valve 100 is shown schematically in Fig. 15, but again, the details of the valve 100 are not rendered.

In some embodiments, a relatively large number of triangular cavities 760 is used, each having a shape general as depicted in Fig. 14. In one embodiment, 30-70 cavities are used, or more specifically on the order of 50 triangular cavities 760 may be used. With a pitch of 2 mm between the cavities 760, it is apparent that the total channel length may be about 8-10 cm long. In view of these numbers, it should be appreciated that the features depicted in Fig. 14 are not to scale. In fact, the triangular cavities 760 are smaller and more numerous than shown in Fig. 14, but for clarity of depiction and to keep the size of the drawing manageable, they are presented as shown in Fig. 14.

As mentioned earlier, another important detail in this design, is the change of aspect ratio of the cross-section of this fluidic path. As mentioned, at the input to the segment of the path containing the triangular cavities, the cross-section of the flow channel may be 110 µm × 80 µm = 1.375. The 110 µm dimension is variable because of the presence of these triangular cavities. However the 80 µm dimension is maintained throughout. As a result the aspect ratio of this portion of the flow channel, aspect ratio being defined as the height divided by the depth, maybe greater than one. In particular the aspect ratio of this flow channel may be 110/80 = 1.375 at the input, and increasing to almost 6 at the apex, before returning to 1.375 at the exit of the cavity. before encountering the transition region shown in Fig. 14.

After approximately 40-70 triangular cavities in the flow path, the flow may encounter the transition region shown in Fig. 14. As shown, this transition region may be located after the last triangular cavity 720 is encountered. In the embodiment shown in Fig. 15, this occurs at the fifth or the sixth turn in the fluid path, and after about 50 triangular cavities have focused the particles into either of two stationary positions exiting in the flow path, as described next.

This length of fluid path, with aspect ratio 1.375, will result in a focusing of the particles in a particular portion of the fluid channel. In particular, the particles may be arranged in two points along the depth dimension. That is, across the 80 µm depths of this flow channel there may exist to concentrated areas where the target particles are urged. This behavior is driven by the Dean flow forces existing in the curved channel with the aspect ratio being greater than one. If this aspect ratio is suddenly changed to a value less than one, the effect will be to urge the target particles into two new, and different paths plus spots with respect to the short dimension of the aspect ratio short dimension of the channel.

This behavior is illustrated by Fig. 16. In Fig. 16, the cross-sectional shape A corresponds to the aspect ratio of 110/80 = 1.375, that is, and aspect ratio greater than one. As illustrated in the figure, the result of this fluid channel shape is to concentrate the particles in two stable locations in the right hand side of the long dimension, or in other words, two positions occur along the short (depth) dimension of the flow channel.

Also illustrated in Fig. 16 is the effect of a sudden change in the aspect ratio, in particular an aspect ratio less than one, such that the channel is deeper than it is tall. In this case, what was the long dimension becomes the short dimension, and the stable locations within the flow channel cross section shift. In Fig. 16 The cross-section B, what was the long dimension 110 is altered to become the short dimension 50 µm. Using the same definition for aspect ratio, the aspect ratio of this cross-sectional channel B is now less than one. As a result, the particles are urged again into a two spots along the short dimension of the flow channel, which is now the height dimension, 50 microns. Or in other words, the particles tend to be focused in two spots along the long dimension, which is now the depth dimension 80 microns.

The effect of this change is therefore to suppress the second stable position that was formed in the AR>1 channel. That is, the AR>1 channel tends to focus particles on the right hand side of the channel, but the transition to cross section B suppresses the second stable position and encourage all the particle to flow in a single location of the right hand side of the channel. This effect is illustrated in Fig. 16A-D where one of the two stable positions is effectively eliminated. Accordingly, the two stable previously focused regions shown in Fig. 16 may be collapsed into one focal region located within a portion of the cross section of the particle focusing channel.

To further clarify, because the target particles were urged into two spaces with aspect ratio greater than one, but two different spaces with aspect ratio less than one, the effect is to undermine or suppress one of the stable positions of the particles as illustrated in Fig. 16B, Fig. 16C and Fig. 16D. In these illuatrations, the lone of the two loci of particles is effectively suppressed, leading only one locus in the flow channel, that being on the right side of the short dimension of the channel as illustrated in Fig. 16D. Fig. 16C and Fig. 16D show the flows and the remaining focal spot within the cross section.

Another way to shift the locations of the stable position within the flow channel, is to impose a 90° turn in the fluid path. This may provide an effect similar to the change in aspect ratio from AR>1 to AR<1, but in the orthogonal dimension. As such, the effect is difficult to render in a 2-dimensional drawing. Nonetheless, the novel flow path is depicted in Fig. 17. It should be understood that the dashed portions of the flow pass shown in Fig. 17 may lie under, over, or adjacent to their projection of the solid lines shown in Fig. 17.

One of the limiting issues in the particle manipulation system described above, is the dynamic range of the detector. The detector may be, for example, a photomultiplier tube (PMT) which creates a cascade of charges when a photon strikes the detector surface. Weak signals, for example a single photon, may be detected by these sensitive devices. However, for stronger fluorescent signals, the cascade may saturate, limiting the dynamic range and thus reducing the quality of the information collected by the detector.

A single photodetector (=sensor) has a limited dynamic range at a given gain setting. If light levels need to be measured that are outside of this range, the gain must be manually adjusted in order to put the light levels within the limited dynamic range of the detector. The invention applies to flow cytometry and to automatically adjust the sensor gain during the measurement of each particle. Downstream processing will combine the signal from the detector with the gain setting that was used for each instant of time to generate a high dynamic range output signal. This technique eliminates the manual gain adjustment and effectively increases the dynamic range of the sensor so that a larger range of light levels can be measured.

It should be understood that a difference between adjusting "sensor" gain and "detector" gain may be that the former may be done via the bias voltage, whereas the latter can be done also in the amplifier or digitally.

The system and circuit described below may provide a high resolution, wide dynamic range optical detector when using a high sample rate Analog to Digital Converter (ADC).

In one embodiment of the invention, the detection platform does not require special front-end optics or multiple optical sensors in order to achieve a high dynamic range. The resulting dynamic range will be higher than the optical sensor can deliver when using a fixed gain.

This platform generates a high speed gain modulation signal which is synchronized to the clock used for the ADC. The gain modulation signal is 50% of the frequency of the ADC clock, and is phase-locked to the ADC clock. The phase between these signals is adjusted such that every other sample from the ADC will be measuring the response of the detector when it is using the high gain setting, and every other sample will be measuring the response of the detector when it is using the low gain setting.

The signal processing system separates the high gain and low gain digital sample streams and performs digital signal processing (DSP) on these streams. The conditioned streams are then scaled and recombined into a single, high resolution, wide dynamic range stream.

The optical sensor and amplification electronics are able to respond properly to the high frequency gain control signal. The signal processing can be tuned to the sensor and amplifier electronics in order to generate an accurate output stream.

In one embodiment, the sensor gain may be switched between two discrete gain levels, called a lower level and a higher level. Obviously, the higher gain level is higher than the lower gain level. The downstream processing may be synchronized to the timing of the lower and higher gain levels to generate the high dynamic range output signal.

In one embodiment, the sensor gain may be switched between more than two discrete gain levels.]

In another embodiment, the sensor gain is adjusted continuously between two gain levels using a predetermined sequence or pattern. A simple example would be a sine wave at a fixed frequency. Because the pattern of the gain control signal is known, the downstream electronics can use timing to determine the precise gain setting that was used for each instant of time.

In another embodiment, the sensor gain is adjusted continuously to keep the output signal within the range of the measurable levels of the downstream electronics. Commonly called automatic gain control. The downstream processing may combine the precise gain setting with the output signal of the detector for each instant of time.

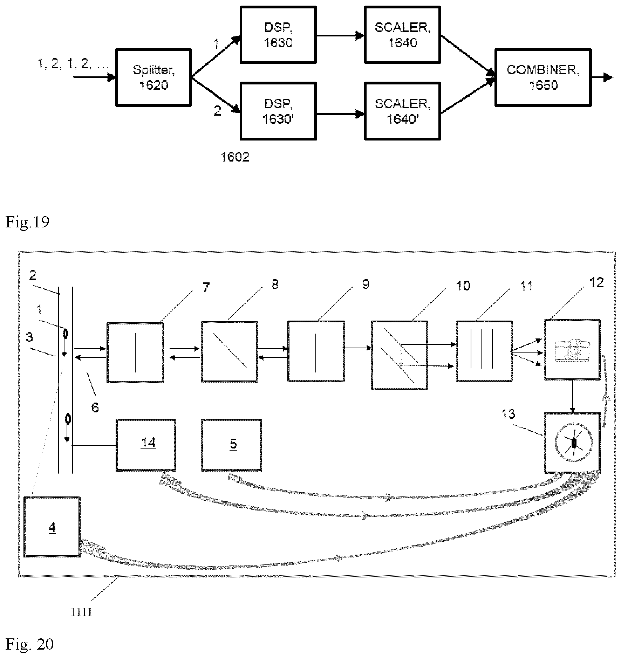

Accordingly, Figs. 18 and 19 describe such a system, wherein the sensor gain on the detector is changed dynamically by a circuit including, in some embodiments, a gain changer or gain modulator, an ADC and a signal processing circuit that demultiplexes and then applies a suitable gain to the higher and the lower sample streams, independently. The sampler streams may then be recombined.

Fig. 18 a is a simplified schematic illustration of a manner for implementing a gain change function on the florescence detector, here a photomultiplier tube (PMT). The gain on the sensor may be modulated, toggled, or varied between a higher value and a lower value by a gain controller 1610. This will result in a signal which varies or is modulated between a higher value 1601 and a lower value 1602.

In Fig. 18(A), portions of the plot labeled with reference number 1601 correspond to the signal amplitude when the gain is at the first higher value, i.e. a higher gain is applied to the signal. The modulation may be characterized by an amplitude and a frequency f. Reference number 1602 indicates the portions of the signal curve where the gain is set to the lower value, i.e. less gain is applied to the signal. The amplitude of the signal thus cycles back and forth between two levels, a higher level 1601 and a lower level 1602.

This variable signal can then be sampled using a clock phase-locked to the gain changing frequency. As mentioned previously, the frequency of the sampling clock may be 2f, whereas the modulation frequency is f. The sample stream from the sampling circuit may then consist of a sequence of values at the higher level 1601, interleaved with a sequence of values at the lower level 1602. The phase locked sample stream may then be sent to an ADC 1605, as shown in Fig. 18(B). As mentioned, the sampling clock and ADC 1605 may be synchronized with the gain controller 1610 of detector, such that the analog to digital converter samples first a high value, 1601, followed be a lower value 1602. As a result, the data coming from the ADC 1605 may consist of a sequence of interleaved higher and lower digitized numbers.

The output of the analog to digital converter may then be provided to a splitter, 1620 or demultiplexer, as shown in Fig. 19. The purpose of the splitter divides the higher gain elements, and the lower gain elements, into two different data streams. The upper path in Fig. 19 corresponds to the higher amplitude samples 1601 and the lower path corresponds to the lower amplitude samples 1602. These two pulse trains may be applied to digital signal processors 1630 and 1630' respectively. The DSP may provide whetever additional signal conditioning may be desired.

A scaling circuit 1640, 1640' may then provide a final opportunity to adjust the magnitude or amplitude of the data, or other attributes. The signals may then be recombined by a combiner or multiplexer 1650.

It should be understood that the embodiment shown and Figs. 18 and 19 are exemplary only, and many other circuits may be envisioned to accommodate the particle manipulation system with cytometric capability and feedback loop and variable gain detector.

In another embodiment, the excitation laser described previously can be modulated instead of the gain of the detector. This accomplishes the same thing. There may be at least two ways. In one embodiment, a single laser may be modulated between a higher and lower power setting. In another embodiment, two lasers may be used, one at higher power that is turned on/off at high speed, and one lower power laser that is continuously on. This low power laser can be very inexpensive. Another alternative is to provide an external variable optical attenuator (VOA) on the output of the laser.

Machine learning and artificial intelligence techniques as described above may also be applied to the variable gain controller 1610 and the sampling clock 1615, to fine tune their performance with respect to the control variables and performance metrics.

Figs. 20-23 illustrate another embodiment of the invention, wherein, the sensors of the detector are controlled individually and/or independently, and according to an expected magnitude of the signal they are expected to receive. The expected signal levels may be based on previous detection, or on geometry of the optical arrangement, or on a monitor detector, for example. These illustrations and the accompanying text below, describes several exemplary embodiments of this concept. However, it should be understood that this list is not exhaustive, and that other embodiments are contemplated within the scope of the appended claim. It should be understood that as used herein, the term "independently controllable" is used synonymously with the term "individually controllable", as each sensor may be controlled individually, and independently of the other sensors.

A first application of the technique may be flow cytometry, and may use a detection system 1111. Fig. 20 shows system 1111 having cells (1) flowing at high speed through a microfluidics channel or capillary (2) past an interrogation region (3). The flow is controlled by a means (14). In this interrogation region, the cells are excited by one or a plurality of excitation light beams, for example non-coaxial excitation light beam(s) from source(s) (4), which are not coaxial with the emitted light beam to be. measured and/or from coaxial excitation light beam(s) from source(s) (5), whose light beam(s) are coaxial with the emitted light beam to be measured. These coaxial excitation light beam(s) are coupled into the optical path via an optical means (8), which may be some arrangement of optical elements such as turning mirrors or lenses. The plurality of excitation light beams may be located at different positions along the channel, and may have different wavelengths and optical power. The emitted light from the interrogation region (6) is collected and collimated by an optical means (7), spread into a beam with an intensity profile in a first spatial axis orthogonal to the axis of propagation by an optical means (9). The resulting beam with intensity profile is then optionally split into two or more beams of the same or different intensities by an optical means (10). A means of spreading the beam(s) spectrally in a second spatial axis then projects the spectra onto a means of detection (12), which generates outputs to a processing means (13). This processing means has the capability to feedback and change parameters of the means for flow, excitation and detection.

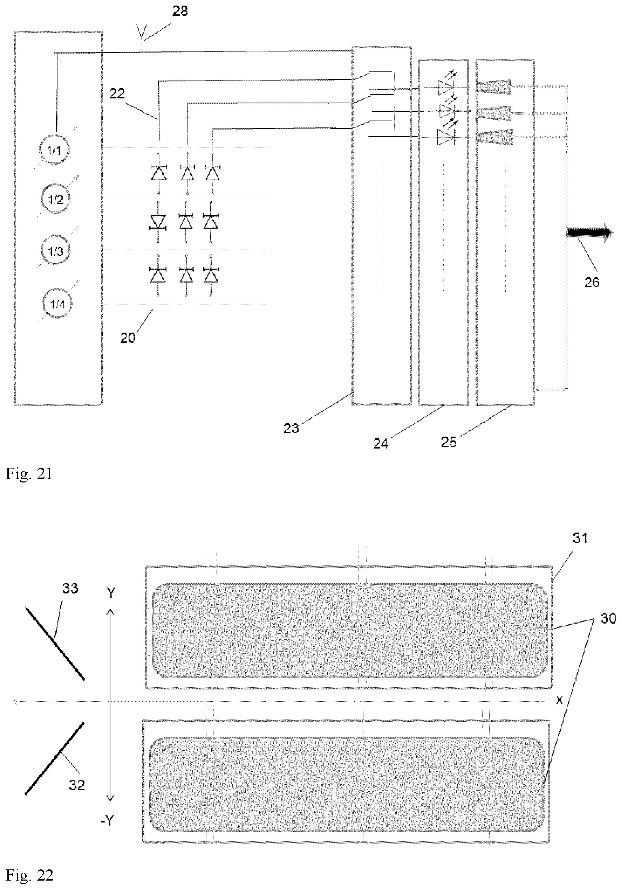

Fig. 21 shows an embodiment of a detection system comprising of a plurality of sensors (20), means of establishing one or more operating parameter(s) of the sensors (21) such as Reverse Bias Voltage, wherein the operating parameter may be set programmatically for individual or groups of sensors. The individual analog outputs of the sensors are advantageously summed by a means (23), whereby the selective summing of "intensity sensors" and/or selective summing of adjacent "spectral sensors" enhances dynamic range, sensitivity and spectral resolution. For example, 2 intensity levels out of the intensity profile may be selected, along with a spectral resolution which sums every 3 spectral sensors.

The resulting analog signals are then amplified by a means with variable programmable gains. These means of amplification may be linear, piece-wise linear or non-linear. The resulting amplified analog signals are then converted to digital by a means (25) which may also have programmable analog gain. The digital outputs (26) are available to the processing means (13).

Fig. 22 shows a possible embodiment in which one or a plurality of beams of emitted light (30, two shown) from the sample are projected onto one or a plurality of arrays of sensors (31, two shown). The beams have intensity profiles (32, 33) in the first axis Y, and are spectrally dispersed in the second axis X. The

In an embodiment, there may be one or a plurality of beams and a corresponding number of arrays of sensors, whereby the beams may originate from the same or different interrogation regions, or from different wavelength ranges of emitted light from the same sample.

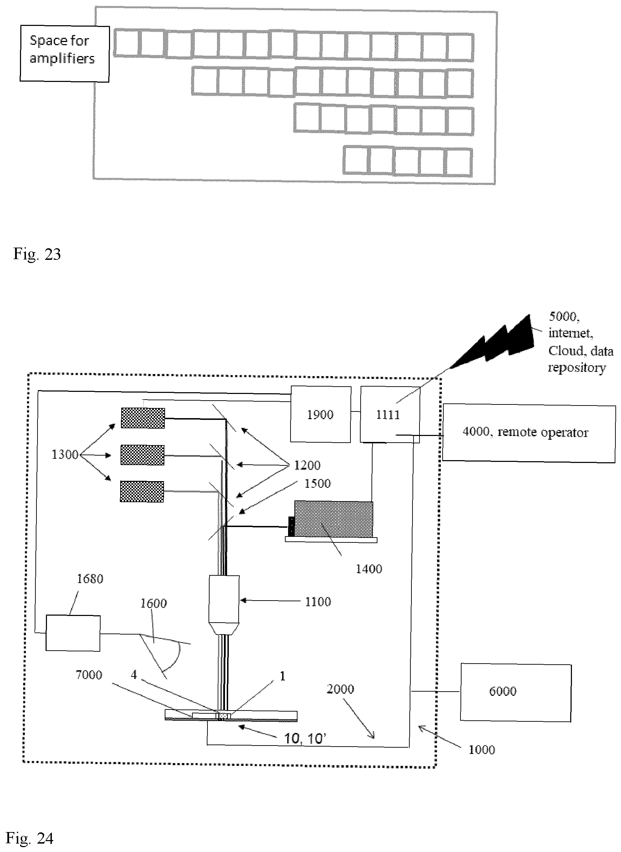

Fig. 23. Shows another embodiment in which a plurality of beams, each covering a different spectral region, is projected onto an advantageous configuration of arrays of sensors. The beams may originate from the same or different interrogation regions, or from different wavelength ranges of emitted light from the same sample.

Fig. 24 is a system-level view showing a system 1000 using many of the components described above. This system 1000 may use the detection means 1111 described above. Among other things, an exemplary layout and connections between the various components of a particle manipulation system 1000 using camera/classifier confirmation. The microfabricated particle manipulation device 100 or 100' with camera/classifier confirmation 400 may be used in a particle manipulation system 1000 and enclosed in a housing containing the components shown in Fig. 24. The MEMS particle manipulation devices 100 or 100' may be enclosed in a plastic, disposable cartridge which may be inserted into the system 1000. The insertion area may be a movable stage with mechanisms available for fine positioning of the particle manipulation device 100 or 100' and associated microfluidic channels against one or more data, which orient and position the detection region and particle manipulation device 100 or 100' with respect to a set of collection optics 1100. If finer positioning is required, the inlet stage may also be a translation stage, which adjusts the positioning based on observation of the location of the movable member 110 relative to a datum.

A camera/classifier confirmation system 1600 may also be included in the particle manipulation system 1000 as show schematically in Fig. 24. It should be understood that although Fig. 24 shows a particle sorting system 1000 which uses a single laser source 1400, multiple light sources, multiple detection optics and multiple channels may also be used. As mentioned previously, other interrogation means may be used instead of or in addition to lasers. The camera system 1600 may be analogous or equivalent to the camera system 160 shown in the previous figures.

Another module, 1680, may perform the gain modulation, ADC, and DSP functions described above with respect to Figs. 18 and 19.

The embodiment shown in Fig. 24 may be based on a FACS-type detection mechanism, wherein one or more lasers 1400 impinges on the sample inlet channel 120 as described above. The relative amount of light may be monitored by a computer 1900. The computer 1900 may then generate a control signal that controls the force-generating means or electromagnet 500. Upon receipt of a fluorescence signal from a target particle, the controller 1900 may output a sort trigger that causes the electromagnet 500 to be energized, thus moving the movable member 110 into the sort position shown in Fig. 7. The movable member thus diverts the target particle from the input channel 120 into the sort channel 122 rather than the waste channel 140. This is normal operation of the microfabrication particle sorting system 1000. The controller 1900 may generate a camera trigger (as well as a sort trigger) based on the detection of this fluorescence signal.

The other optical components in particle manipulation system 1000 may include a beamsplitter 1500 and multiple color detectors 1300. The beam splitter1500 may reflect the incoming light from laser 1400 onto the MEMS manipulation device 100.

The output of detectors 1300 may be analyzed by the controller 1900 and compared to a threshold in normal operation. The controller 1900 may be understood to be operating in conjunction with the deep learning module 1950 described above, where in the deep learning module may include an annotated image library 1960 and a classifier 1970 and an analyzer 1980.

Accordingly, the particle manipulation system may include a particle manipulation stage and a sample stream in a microfluidic inlet channel, an optical interrogation device upstream of the particle manipulation stage which identifies target particles, and an optical confirmation device downstream of the particle manipulation stage, wherein the optical confirmation device uses a camera to determine the presence or absence of a target particle.

In one embodiment, the MEMS particle manipulation system 1000 may be used in conjunction with one or more additional downstream cameras 160, wherein the additional cameras are used to confirm the effectiveness or accuracy of a manipulation stage in manipulating a stream of particles. The downstream evaluation by camera, as described above, may occur beyond the sorting stage 100 or 100' and may allow the operator to measure one event number (e.g. the captured event rate post-sort) divided by another event number (e.g. the initial event rate pre-sort) for individual particle types, and to feedback to adjust initial interrogation parameters (e.g. such as x, y, z position and also "open window" length in time) based on this ratio. This method may thus be used to optimize the yield or accuracy of the system 1000.

Alternatively, the operator could measure the event rate post-sort of target cells, divided by total event rate post-sort feedback to adjust initial laser interrogation parameters such as x, y, z position and also "open window" length in time, in order to optimize the purity of the sorting system 1000. These sorting parameters may be adjusted by changing control signal 2000 which is sent by computer 1900 to electromagnet 500, or by changing the optical detection parameters or by changing the laser control signals, as shown in Fig. 24. In any case, the camera system 1600 may be used in conjunction with controller 1900 to improve or optimize the performance of the system with respect to at least one measured parameter.

Accordingly, the particle manipulation system may image the target particles with the camera, determine the locus of the particles within a field of view of the camera with a controller, and adjust a sorting parameter. The system may optionally be used with machine learning or artificial intelligence techniques to choose superior sorting parameters. One such sorting parameter is the timing of the sort gate, but other parameters may include at least one of laser fluorescent pulse shape, width, magnitude or duration, laser intensity, optical alignment or focusing, gate duration, and so forth. These parameters may be optimized with respect to purity, yield, or some other measured output of the system 1000.

The particle manipulation system described above may make use of any of a number of particle manipulations. These manipulations may include moving the particles using a pressure pulse, so as to guide them in a particular direction. Other manipulations may include washing, mechanical interference such as pushing or squeezing, application of heat, cooling, application of fields such as magnetic or electric fields. This field-based manipulation may result in electroporesis, transfection, or electrophoresis which may alter the trajectory of the particles. More broadly, the particle manipulation system may be combined with transfection of wide-ranging sorts and methodologies.

As discussed further below, the system 1000 may include internet capability, remote operation and remote data storage. The required connections to the internet, cloud, or data repository 5000 may be hardwired or wireless, and may allow non-local operation by a remote operator 4000.

Many sorts of particle manipulations are envisioned using this system 1000. The manipulations may include, for example, mechanical probing, squeezing, slicing, rupturing. Other embodiments may use heating, tagging, sorting, imaging, counting. The particle may be focused into a particular streamline, which may improve performance of the system.

In some embodiments, the particle manipulation system 1000 may be coupled to a fluidic focusing structure as described above, which tends to concentrate the particles in a particular portion of the microfabricated channel. The fluidic focusing system may include the three-dimensional focusing channel described above, which may focus the ensemble of particle into stream lines near the center of the channel.

In some embodiments, the particle manipulation system 1000 may be coupled to a droplet generator which generates droplets containing one or more known, identified particles. These droplets may optionally be dispensed into an immiscible fluid, such as water droplets into a hydrophobic fat or an oil. These particles may be brought into the droplet or sequence of droplets in a particular desired order, under computer control, by proper manipulation of the system. The target particles may also be coupled to a bar coded bead which identifies uniquely the bead/particle combination, and thus identifies uniquely the bound particle.

In some embodiments, the particle manipulation system 1000 may be coupled to a genetic sequencer, that may sequence the DNA or RNA of the particles enclosed in the droplet.

In some embodiments, the particle manipulation system 1000 may be combined with a device that can activate a particular bioactive compound, for example a protein. The protein may be activated optically (photoactivation) or chemically, for example. The activated compound may then interact with the manipulated particle.

In other embodiments, the particle manipulation system 1000 may be combined with a selective lysis system. In this case, the manipulated particles may be lysed on demand, and only particular cells subjected to the lysing. The lysant may be photoactivated.

Similarly, the particle manipulation system 1000 may be combined with a selective optical activation system, for example a selectable UV light source. The UV light may photoactivate a bleaching/quenching system, wherein the UV light is applied to a fluorophore to quench the fluorescence. This system may use the above described hardware and software system to apply the photoactivation to only a subset of targeted particles.

In many of these embodiments, a measurement (of a control variable) is made using a sensor, and this measurement may form the basis of a feedback system wherein a manipulation parameter is adjusted based on the value of the measurement (of the control variable), and the measurement is taken again after the adjustment. Thus the "manipulation parameters" may be those variables used by the control loop to alter the performance of the manipulation system in some way. Accordingly, the feedback loop may be used to drive the measurement of this control variable to a predefined level, using the manipulation parameters.

Examples of control variables may include Hall effect detection, fluorescence intensity, scatter, side scatter, locus of particle detected, statistics as to the relative location of particles in the channel. Additionally, capacitive measurements may be used to detect the passage of the target particle within the channel. Other indicators may include the deflection of an mechanical device, sensor or actuator. Accordingly, the control variable may be, for example, fluorescence, capacitance, mechanical or spectroscopic data, the number of live or dead cells passing through the device, or their ratio. The feedback loop may be operable to improve or maximize an aspect of the manipulated population, such as their purity or yield, ratio of live to dead.

Fourier-transform infrared (FTIR) spectroscopy may also be used to measure a fluorescence spectrum of a particle. FTIR is a technique used to obtain an infrared spectrum of absorption or emission of a solid, liquid or gas. An FTIR spectrometer simultaneously collects high-resolution spectral data over a wide spectral range.

Examples of the manipulation parameters may include timing of a gate for a sorter, duration of the gate signal, waveform of the valve timing signal. Other manipulation parameters may include fluid velocity, fluid pressure, particle concentration. The feedback loop may attempt to improve or maximize the tightness of distribution of the particles in the channel, and the location of their locus. Alternatively, sort efficiency, yield, timing information, velocity, fluid flow rate, disturbances in the flow arising for example from the opening or closing of a valve. As mentioned previously, the parameters that may be adjusted based on the measurements may be valve timing, sort gate, flow rate, viscosity, laser algorithms, and adjusting the timing of the leading and/or trailing edges of the valve gate signal.

In some embodiments, the particle manipulation system may be coupled with a cell counter/analyzer or cytometer, such as the MACS Quant, developed and manufactured by Miltenyi Biotec B.V. & Co. KG. The cytometer may provide valuable analytical information such as particle size and distribution, wherein this information is then shared with the particle manipulation system to further optimize the manipulation in terms of target particle and cell populations.

The cytometer may alternatively by disposed downstream of the particle manipulation system, in order to gather information or statistics as to the performance of the particle manipulation system. The cytometer may assess the sort purity or yield, for example.

In other embodiments, the particle manipulation system 1000 may be coupled to a particle sorting system. The particle sorting system can be configured to perform a pre-sort or debulking, to remove a large number of non-target species, before routing the sorted stream to the particle manipulation system. A magnetic bead cell separation, for example using Miltenyi Biotec B.V. & Co. KG MACSiMag, may do a pre-sort/debulking to reduce the concentration of cells in a sample. A cell handling system such as the Miltenyi Biotec B. V. & Co. KG CliniMACS Prodigy may be used to increase automation and reduce handling of the fluids and samples, for example.

In other embodiments, the particle manipulation system 1000 may be operated in conjunction with a cloud computing system, wherein operational software is downloaded from the cloud, and the results of the procedure may be uploaded. After downloading an algorithm with control parameters and target quantities for the feedback loop, the results of the particle manipulation may then be uploaded to the cloud for remote evaluation. The cloud may serve as a repository of data for manipulations occurring in different geographic locations, such that results may be quickly and easily compared.

In other embodiments, the particle manipulation system 1000 may be coupled to a robotically controlled automation system. The system may perform the manipulations of fluids such as buffers, reagents and lysants, to name just a few. When combined with a plurality of fluid receptacle such as multiwell titer plates" large scale parallel operations can be performed, greatly improving throughout and efficiency. Very few human operators would be needed to oversee the operations, and the oversight could b done remotely, increasing the overall safety of the system. As before, remote operation could be easily combined with robotic control over the system, cloud-housed software and global data repositories.

The particle manipulation system 1000 can be implemented on manufacturing lines, such as cell manufacturing lines, and can thus serve as quality control devices, to maintain the integrity of the manufacturing process. Any deviation from expected values, for example, purity, yield and viability, could prompt the interruption of the manufacturing process for failure analysis to take place. Again, this can all be done remotely.

The particle manipulation system may be combined with PCR testing to amply the effluent or to confirm the identity of the pathogen.

In other embodiments, the particle manipulation system may be coupled with other cell manufacturing or research tools, such as incubators and centrifuges. In other embodiments, the system may be coupled to at least one of a mixer, a stirrer, a well plate, an optical analyzer, and an imaging system.

The coupling may be done through direct fluidic plumbing, or alternatively by robotic transfer such as pipetting, or, of course, under human control.

As mentioned, the data may be uploaded to an internet-enabled data repository 5000, and a remote operator 4000 may be notified that the algorithm has run to completion, and that results are available. The operator can be notified by SMS texting, a cell phone message or an email, for example. The communications may be effected over Bluetooth, WiFi or cellular service to an operators phone, computer or other mobile device.

The algorithm could be self-correcting, that is, under feedback control, for a largely completely automated process. Combined with robotically controlled tasks such as the movement of fluids, the entire process may be possible with little or no human intervention.

Alternatively, the system can adaptively respond to events occurring, such as an unexpected change in pressure or flow, indicating that a clog is forming in a channel.

The algorithm may make use of a preconfigured setup, design around the particular application. For example, if it is desired to sort a particular sort of cell such as a tumor, stem or immune cell, a pre-determined package of parameters may be downloaded from the cloud and installed on the particular particle manipulation system. Upon successfully running that algorithm, the operator may be informed wirelessly of the outcome, and that the data has been posted to the cloud or to some other data storage device. The data storage device may be made accessible to other researchers, clinicians or operators, in order to compare the data and outcomes. The parameters may include compensation parameters related to size, fluorescence or some other attribute of the particle.

In other embodiments, the detector used in the system may have variable gain applied electronically in response to variable signal levels. In other embodiments, the pixels or sensors of the detector may be controlled independently to adjust the gain to expected levels of input. The fluorescent signal may be separated spectrally by a wavelength separating device.

Accordingly, disclosed here is a variable gain detector, using at least one of 1) a circuit that varies the gain applied to a sensor between at least two values, a higher value and a lower value; and 2) a detector having a plurality of independently controllable sensors with variable gain. The detector may further comprise a sampling circuit that samples the higher value and the lower value of the gain applied to the sensor, and digitizes these samples of the higher value and the lower value generated by the sampling circuit.

The variable gain detector may further include a wavelength separating device which separates a multiwavelength signal emitted from the biological sample according to the wavelengths of the multiwavelength signal.

The wavelength separating device may form a spatial intensity profile on a first spatial axis. The variable gain detector may also have a sampling circuit that samples the higher value and the lower value, and digitizes these samples. The wavelength separating may be implemented using refractive or diffractive optics, a graded optical filter, filters of different attenuations. The intensity profile may be projected onto on or more of the plurality of detectors, wherein the same or different light intensities are incident onto the plurality of independently controllable sensors.

The independently controllable sensors may be programmable, or even remotely programmable. The independently controllable detectors may be arranged to detect four spectrally dispersed wavelengths.

The detector may further comprise a demultiplexer that separates the digitized higher value and digitized lower value. The detector may further comprise at least two signal conditioning circuits that separately condition the digitized higher value and the digitized lower value. The detector may further comprise at least two signal conditioning circuits apply a first gain to the digitized higher value and a second gain to the digitized lower value.

Also disclosed here is a system for manipulating particles, comprising a microfabricated cell sorting system, which distinguishes target cells from non-target material, wherein the target cells are distinguished by a laser-induced fluorescent signal, and wherein this laser-induced fluorescent signal is detected by the variable gain detector. The cell sorting system may include a microfabricated valve that separates the target particle from non-target material. The valve may move in a plane parallel to a fabrication plane, and uses electromagnetic actuation.

While various details have been described in conjunction with the exemplary implementations outlined above, various alternatives, modifications, variations, improvements, and/or substantial equivalents, whether known or that are or may be presently unforeseen, may become apparent upon reviewing the foregoing disclosure. Accordingly, the exemplary implementations set forth above, are intended to be illustrative, not limiting.

## Claims

1. A variable gain detector, comprising:
at least one circuit that varies a gain applied to a sensor between at least two values, a higher value and a lower value, and a detector having a plurality of independently controllable sensors with variable gain, wherein the sensor senses fluorescent light emitted from a biological sample tagged with a fluorophore.

2. The variable gain detector of claim 1, further comprising:
a wavelength separating device which separates a multiwavelength signal emitted from the biological sample according to the wavelengths of the multiwavelength signal.

3. The variable gain detector of claim 1 or 2, wherein the wavelength separating device forms a spatial intensity profile on a first spatial axis, wherein the first spatial axis isorthogonal to a axis of propagation of the fluorescent light.

4. The detector of claim 3, wherein the spatial intensity profile is projected onto one of a plurality of sensors, wherein the same or different light intensities are incident onto the plurality of independently controllable sensors.

5. The variable gain detector of any of claims 1 to 4, further comprising:
a sampling circuit that samples the higher value and the lower value of the gain, and digitizes these samples.

6. The detector of any of claims 2 to 5, wherein the wavelength separating device comprises at least one of refractive optics, diffractive optics, a graded optical filter, and filters of different attenuations.

7. The variable gain detector of any of claims 1 to 6, further comprising at least two signal conditioning circuits that separately condition the digitized higher value and the digitized lower value.

8. The variable gain detector of claim 7, wherein the at least two signal conditioning circuits apply a first gain to the digitized higher value and a second gain to the digitized lower value.

9. The detector of claim 3, wherein fluorescent light emitted from the biological sample is spectrally separated into its wavelength components along a second spectral axis.

10. The variable gain detector of any of claims 1 to 9, wherein the independently controllable sensors are programmable.

11. The variable gain detector of any of claims 1 to 10, wherein the independently controllable sensors are arranged to detect four spectrally dispersed wavelengths.

12. The variable gain detector of any of claims 1 to 11, further comprising:
a demultiplexer that separates the digitized higher value and digitized lower value.

13. A system for manipulating particles, comprising:
a microfabricated cell sorting system, which distinguishes target cells from non-target material, wherein the target cells are distinguished by a laser-induced fluorescent signal, and wherein this laser-induced fluorescent signal is detected by the variable gain detector of any of claims 1 to 12.

14. The system for manipulating particles of claim 13, wherein the cell sorting system includes a microfabricated valve that separates the target particle from non-target material.

15. The system for manipulating particles of claim 14, wherein the valve moves in a plane parallel to a fabrication plane, and uses electromagnetic actuation.
